# FASCICULE DE BREVET EUROPEEN

(11) **EP 1 693 606 B1**
(45) Date de publication et mention de la délivrance du brevet: **07.10.2009**
(21) Numéro de dépôt: 06000897.6
(22) Date de dépôt: 17.01.2006
(51) Int. Cl.: F16J 15/08

(54) **Joint métallique comportant une surépaisseur formée de protubérances discontinues**
Metallische Dichtung mit einer Verdickung in Form von unterbrochenen Vorsprüngen
Metal gasket with a thickening formed by interrupted protusions

(30) Priorité: 17.02.2005 FR 0550455
(43) Date de publication de la demande: 23.08.2006
(73) Titulaire: Carl Freudenberg KG, 69469 Weinheim (DE)
(72) Inventeur: Vauzelle, Serge, 87140 Saint-Symphorien-sur-Couze (FR)

(56) Documents cités:
- EP-A- 1 298 364
- DE-A- 10 009 902
- JP-A- 10 339 372

## Description

La présente invention se rapporte à un joint métallique comportant une surépaisseur formée de protubérances discontinues, notamment à un joint de culasse comportant une surépaisseur formée de protubérances discontinues.

Un joint de culasse, disposé entre un bloc moteur et une culasse, comprend généralement une ou plusieurs feuilles métalliques ou tôles comportant des ouvertures susceptibles de coopérer avec les chambres de combustion et des orifices permettant le passage de fluides ou des moyens de serrage tels que des tiges filetées. Voir par exemple EP-A-1298364.

Les joints de culasse dits dynamiques sont susceptibles de s'adapter d'une part aux variations de l'écartement entre le bloc moteur et la culasse en raison notamment des phénomènes de déformation-dilatation, et d'autre part, aux variations géométriques telles que l'état de surface, le parallélisme, la planéité ou autres, qui sont susceptibles de varier d'un bloc moteur à l'autre ou d'une culasse à l'autre.

Ce type de joint comprend généralement une nervure susceptible d'entourer les ouvertures et/ou les orifices de manière à former une barrière d'étanchéité.

Lorsque le joint est disposé entre le bloc moteur et la culasse, la nervure est fortement comprimée et se déforme de manière à s'adapter à la géométrie des différents éléments. En raison de son élasticité, la nervure est susceptible de se déformer lors du fonctionnement pour s'adapter aux variations de l'écartement entre le bloc moteur et la culasse.

De manière à conserver l'élasticité de la nervure et ne pas atteindre sa déformation plastique lors du montage ou en fonctionnement, on prévoit généralement de manière adjacente un limiteur d'écrasement, appelé stoppeur lorsque ce dernier est intercalé entre la nervure et une ouverture adaptée à une chambre de combustion.

Selon un premier mode de réalisation, le joint comprend un empilage de tôles avec au moins une tôle dite élastique munie d'au moins une nervure d'étanchéité et une autre tôle dite intercalaire n'ayant pas de propriétés élastiques sur laquelle sont ménagées les surépaisseurs. Même si ce mode de réalisation permet de simplifier le procédé de fabrication, il ne donne pas satisfaction en raison de la présence de plusieurs tôles empilées qui génère des coûts de matière première importants.

Selon un autre mode de réalisation, le joint comprend un stoppeur sous forme d'une sertissure ménagée au niveau du bord de la tôle délimitant l'ouverture. Selon un autre mode de réalisation, le joint peut comprendre au niveau du bord de la tôle délimitant l'ouverture des bourrelets circulaires et concentriques obtenus par matriçage. Ces deux modes de réalisation nécessitent un outillage coûteux et sont difficiles à mettre en oeuvre.

Selon une autre variante, le stoppeur se présente sous forme d'un anneau distinct relié par tout moyen à une des tôles du joint. Cette solution permet d'obtenir des éléments simples. Toutefois, leur assemblage est problématique et génère des surcoûts, notamment si on cherche à automatiser la fabrication du joint.

Selon une autre problématique, la présence d'un stoppeur à épaisseur constante provoque généralement des contraintes mécaniques au niveau des tôles en raison de l'arc-boutement desdites tôles au moment du serrage. D'autre part, il est nécessaire d'avoir une pression de serrage homogène sur l'ensemble de la surface du joint de culasse pour obtenir une bonne étanchéité.

Aussi, pour résoudre ces problèmes, une première solution consiste à prévoir un stoppeur avec une surépaisseur variable pour obtenir une répartition homogène de l'effort de serrage sur la périphérie des ouvertures prévues pour les chambres de combustion. Cette solution n'est pas satisfaisante car elle pose des problèmes de positionnement lorsque la surépaisseur se présente sous la forme d'un stoppeur séparé des tôles, elle génère des surcoûts en raison des techniques utilisés pour réaliser lesdits surépaisseurs ou elle est impossible dans le cas des sertissures.

En variante, des surépaisseurs localisées sont prévues dans la zone dite hors gaz c'est-à-dire à l'extérieur des nervures, permettant de réduire les contraintes et d'obtenir une pression de serrage homogène sur l'ensemble de la surface du joint.

Selon un premier mode de réalisation connu, la surépaisseur est obtenue en rapportant un clinquant ou une tôle mince, d'épaisseur inférieure ou égale à 0,1 mm sur la surface d'une des tôles.

Cette solution n'est pas satisfaisante car la mise en place du clinquant n'est pas aisée, ce dernier étant susceptible de se plier. Par ailleurs, il est nécessaire que le clinquant soit lié mécaniquement à la tôle intercalaire pour jouer pleinement son rôle. Or, la fixation d'un élément extrêmement mince est relativement complexe et coûteuse.

Selon un second mode de réalisation, la surépaisseur est obtenue par matriçage d'une des tôles afin de lui procurer une épaisseur variable. Cette solution n'est également pas satisfaisante car le matriçage d'une tôle afin de lui donner des épaisseurs variables localisées est relativement complexe et coûteux à mettre en oeuvre.

Selon une autre solution, la ou les surépaisseurs sont réalisées sur une tôle intercalaire différente de celle(s) portant la ou les nervures. Comme précédemment, cette solution ne donne pas satisfaction en raison de la présence de plusieurs tôles empilées qui génère des coûts de matière première important.

Par conséquent, quel que soit l'endroit ou la configuration, la réalisation d'une surépaisseur, notamment un limiteur d'écrasement, est problématique et génère des surcoûts. Cette problématique est accentuée si on cherche à faire varier l'épaisseur du limiteur d'écrasement en fonction des zones.

Aussi, la présente invention vise à pallier les inconvénients de l'art antérieur en proposant un joint métallique comportant une surépaisseur, notamment un limiteur d'écrasement, de conception simple, avec des rigidités variables réparties selon une cartographie adaptée, notamment aux éléments entre lesquels ledit joint est intercalé.

A cet effet, l'invention a pour objet un joint susceptible d'être disposé entre des surfaces à étancher, comprenant au moins une ouverture et/ou orifice de manière à faire communiquer des conduits débouchant respectivement au niveau de chaque surface à étancher, et au moins une feuille ou plaque, appelée tôle, ladite tôle comprenant au moins une nervure formant une barrière d'étanchéité ainsi qu'au moins une surépaisseur formant butée, caractérisé en ce qu'au moins une surépaisseur est constituée d'une pluralité de protubérances oblongues, lesdites protubérances étant produites par déformation plastique par emboutissage de ladite tôle avec chacune d'un côté de la tôle une forme en creux et de l'autre côté de la tôle une forme en saillie formant protubérance, les déformations oblongues permettant d'avoir à chaque extrémité des zones de fortes résistances à l'écrasement en raison du profil courbe de la paroi latérale de la déformation et en partie centrale une zone de moindre résistance à l'écrasement en raison du profil sensiblement rectiligne de la paroi latérale.

D'autres caractéristiques et avantages ressortiront de la description qui va suivre de l'invention, description donnée à titre d'exemple uniquement, en regard des dessins annexés sur lesquels :
- la figure 1 est une vue de dessus d'un joint de culasse,
- la figure 2 est une vue de dessus illustrant en détails des limiteurs d'écrasement,
- les figures 3A à 3C sont des coupes selon les lignes de coupe A-A, B-B et C-C de la figure 2 selon un mode de réalisation du joint,
- les figures 4A à 4C sont des coupes selon les lignes de coupe A-A, B-B et C-C de la figure 2 selon un autre mode de réalisation du joint,
- la figure 5 est une coupe transversale d'une protubérance,
- la figure 6 est une coupe d'une protubérance selon un plan sensiblement parallèle au plan de la tôle,
- la figure 7 est une coupe transversale d'un limiteur d'écrasement,
- la figure 8 est une vue de dessus d'un joint métallique,
- la figure 9A est une vue de dessus d'une partie du joint de la figure 8 illustrant en détails une première variante de réalisation d'un limiteur d'écrasement,
- la figure 9B est une vue de dessus d'une partie du joint de la figure 8 illustrant en détails une autre variante de réalisation d'un limiteur d'écrasement, et
- les figures 10A et 10B sont des coupes selon les lignes de coupe A-A et B-B de la figure 9B.

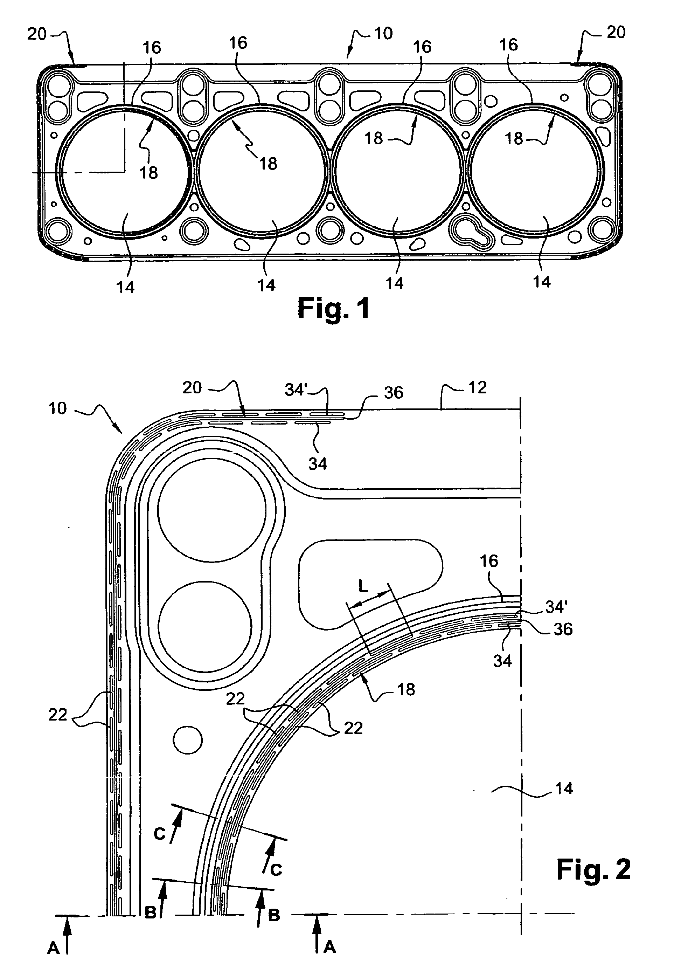

Sur la figure 1, on a représenté en 10 un joint selon l'invention, susceptible d'être intercalé entre une première et une seconde surfaces à étancher, par exemple une culasse et un bloc moteur dans le cas d'un joint de culasse. Bien entendu, l'invention n'est pas limitée à cette application et couvre au contraire toutes les applications nécessitant un joint sensiblement plat.

Le joint 10 comprend au moins une feuille ou plaque, appelée tôle 12, de préférence métallique, revêtue ou non.

Le joint comprend au moins une ouverture et/ou orifice 14 de manière à faire communiquer des conduits débouchant respectivement au niveau de chaque surface à étancher. Dans le cas d'un joint de culasse, le joint comprend au moins une ouverture susceptible de coopérer avec une chambre de combustion et des orifices permettant le passage de fluides ou des moyens de serrage tels que des tiges filetées.

De manière connue, le joint comprend au moins une barrière d'étanchéité, de préférence dynamique, sous forme d'une nervure 16, la distance séparant les deux surfaces à étancher étant susceptible de varier en fonctionnement.

Selon les cas, la nervure 16 s'étend de manière continue ou non, de manière circulaire ou non. A titre d'exemple, la nervure 16 peut entourer une ouverture 14 prévue pour une chambre de combustion. Dans ce cas, la nervure peut être sensiblement circulaire et être disposée à une distance sensiblement constante du bord du joint délimitant l'ouverture 14.

Cette nervure 16 est réalisée sur une tôle 12 dite élastique ayant des propriétés permettant à ladite nervure de se déformer de manière élastique. En complément de la nervure 16, la tôle 12 comprend au moins une surépaisseur susceptible de former un limiteur d'écrasement ou butée pour éviter les déformations trop importantes de ladite nervure 16.

De préférence, la tôle 12 comprend une surépaisseur constituant un limiteur d'écrasement 18 pour chaque ouverture 14, appelé stoppeur, disposé entre le bord de l'ouverture 14 et la nervure 16 et éventuellement une surépaisseur 20 dans les zones dites hors gaz c'est-à-dire à l'extérieur des nervures 16 afin de limiter les déformations des éléments à étancher, notamment de la culasse. Avantageusement, les surépaisseurs permettant de limiter les déformations 20 sont prévues à chaque extrémité de la tôle 12. Toutefois, de telles surépaisseurs 20 pourraient être disposées autour des orifices prévus pour le passage des moyens de serrage et/ou des fluides.

Le fait de prévoir les deux fonctions barrière d'étanchéité et butée sur la même tôle permet de réduire le nombre de tôles ce qui contribue à réduire les coûts de matière première. De plus, grâce à cet agencement, on évite les problème de positionnement de la surépaisseur par rapport à la nervure comme pour les stoppeur indépendant de l'art antérieur.

La surépaisseur ayant pour fonction de limiter l'écrasement de la nervure, ladite surépaisseur a une hauteur inférieure à ladite nervure.

Selon l'invention, la surépaisseur est constituée d'une pluralité de protubérances 22 de forme oblongue, produites par déformation plastique par emboutissage de ladite tôle avec chacune d'un côté de la tôle une forme en creux et de l'autre côté de la tôle une forme en saillie formant protubérance.

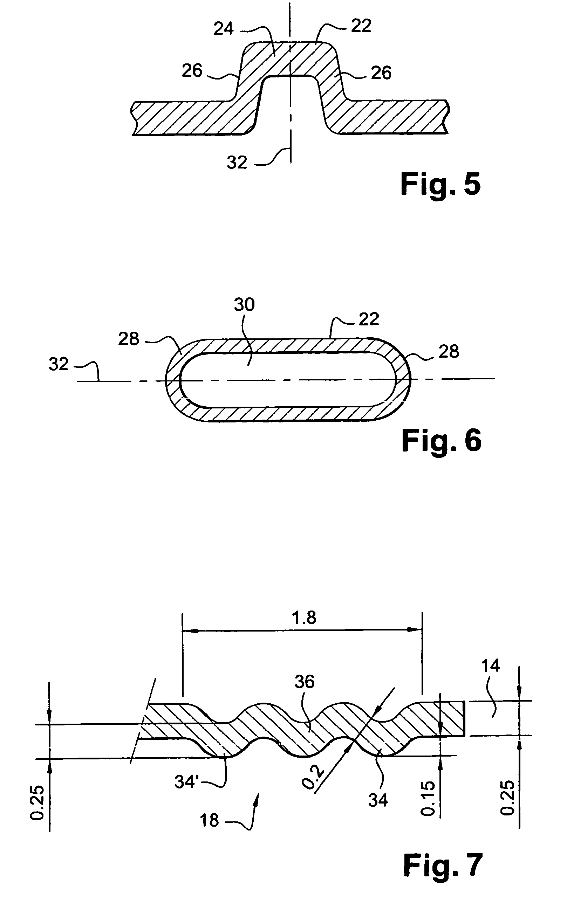

Selon l'invention, les déformations sont réalisées par emboutissage c'est-à-dire en repoussant la matière avec un outil, le fond 24 de la déformation ayant une épaisseur sensiblement égale à celle de la tôle alors que les parois latérales 26 ont une épaisseur inférieure en raison de l'étirement de matière, comme illustré sur la figure 5. Ce type de déformation avec un étirement de la matière permet d'éviter que la protubérance disparaisse en raison d'une pression trop importante et de conserver toujours une surépaisseur.

Selon l'invention, le profil de la déformation est fermé c'est-à-dire que la paroi latérale de la déformation est continue sur toute la périphérie de la déformation et a une hauteur sensiblement constante, comme illustré sur la figure 6.

La forme oblongue permet d'avoir à chaque extrémité 28 des zones de fortes résistances à l'écrasement en raison du profil courbe de la paroi latérale et en partie centrale 30 une zone de longueur L de moindre résistance à l'écrasement en raison du profil sensiblement rectiligne de la paroi latérale. Par forme oblongue, on entend une forme plus longue que large. Ainsi, les extrémités de la forme oblongue peuvent ne pas être courbes mais en forme de pointes ou autres avec au moins deux directions.

Ainsi, il est possible d'ajuster la rigidité de la surépaisseur en ajustant la densité des protubérances et/ou la longueur L des protubérances.

Cet agencement permet d'obtenir de manière simple des rigidités adaptées en fonction des zones et d'établir une cartographie de la rigidité en fonction du type de joint.

Ainsi, les zones des surépaisseurs disposées entre les trous de passage des moyens de serrage et les ouvertures correspondant aux chambres de combustion sont généralement moins rigides que les autres zones, la longueur L des protubérances dans ces zones étant plus grande que la longueur des protubérances 22 dans les autres zones.

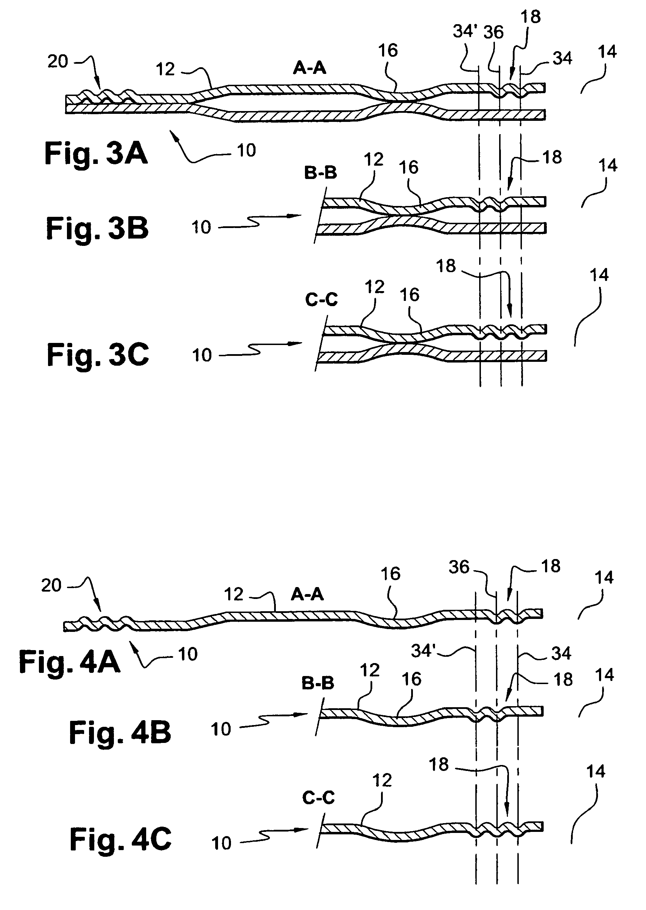

De préférence, le joint 10 comprend une seule tôle comportant au moins une nervure et au moins une surépaisseur comme illustré sur les figures 4A à 4C.

En variante, le joint peut comprendre un empilage d'au moins deux tôles, comme illustré sur les figures 3A à 3C, l'une des tôles comportant au moins une nervure et la ou les surépaisseurs.

Selon les zones, la forme oblongue peut avoir un axe médian 32 rectiligne ou courbe.

Pour une épaisseur de tôle de l'ordre de 0,25 mm, la hauteur des protubérances varie préférentiellement de l'ordre de 0,04 à 0,15 mm, comme indiqué sur la figure 7.

Selon une caractéristique de l'invention, les axes médians 32 des protubérances 22 sont alignés selon au moins une ligne. De préférence, les axes médians 32 des protubérances sont disposés selon des circonférences dans le cas d'un stoppeur.

Ainsi, les surépaisseurs 20 permettant de limiter les déformations sont constituées par des protubérances 22 dont les axes médians sont alignées selon des lignes 34, 34' sensiblement parallèles au bord périphérique du joint et les surépaisseurs 18 formant stoppeur sont constituées par des protubérances 22 dont les axes médians sont disposés selon des cercles concentriques aux ouvertures 14.

Selon une première variante illustrée par la figure 2, la surépaisseur comprend aux moins deux lignes 34, 34' de protubérances. De préférence, une micro-nervure 36 est disposée entre deux lignes 34, 34' de protubérances.

Selon ce mode de réalisation, les surépaisseurs 18 formant stoppeur comprennent deux lignes 34, 34' de protubérances 22 disposées de part et d'autre d'une micro-nervure 36, les dites lignes étant concentriques à chaque ouverture 14.

Selon ce mode de réalisation, la micro-nervure 36 forme une première barrière d'étanchéité ainsi qu'une barrière thermique entravant la propagation du flux thermique vers la nervure d'étanchéité et aussi, participe à un lissage ou homogénéisation de la fonction stoppeur décrite dans cette invention.

Comme illustré sur les figures 3A à 3C et 4A à 4C, les protubérances 22 sont réparties sur les lignes 34 et 34' de manière à disposer les extrémités 28 des protubérances 22 de la ligne 34 au droit des parties centrales 30 des protubérances de la ligne 34' et vice versa.

Cet agencement permet d'obtenir une meilleure répartition des zones de forte rigidité.

Ainsi, selon une coupe radiale A-A, la surépaisseur comprend une protubérance au niveau de la ligne 34 et la micro-nervure 36, selon une coupe radiale B-B, elle comprend la micro-nervure 36 et une protubérance au niveau de la ligne 34' et selon une coupe C-C, elle comprend une protubérance au niveau de la ligne 34, la micro-nervure 36 et une protubérance au niveau de la ligne 34'.

La figure 7 représente en détails la surépaisseur formant stoppeur des figures 3C et 4C. On retrouve l'étirement de la matière au niveau des flancs des protubérances et de la micro-nervure, l'épaisseur de la tôle étant de 0,25 mm en dehors de la zone de surépaisseur et au droit des sommets des protubréances et de la micro-nervure et de 0,20 mm au niveau des flancs.

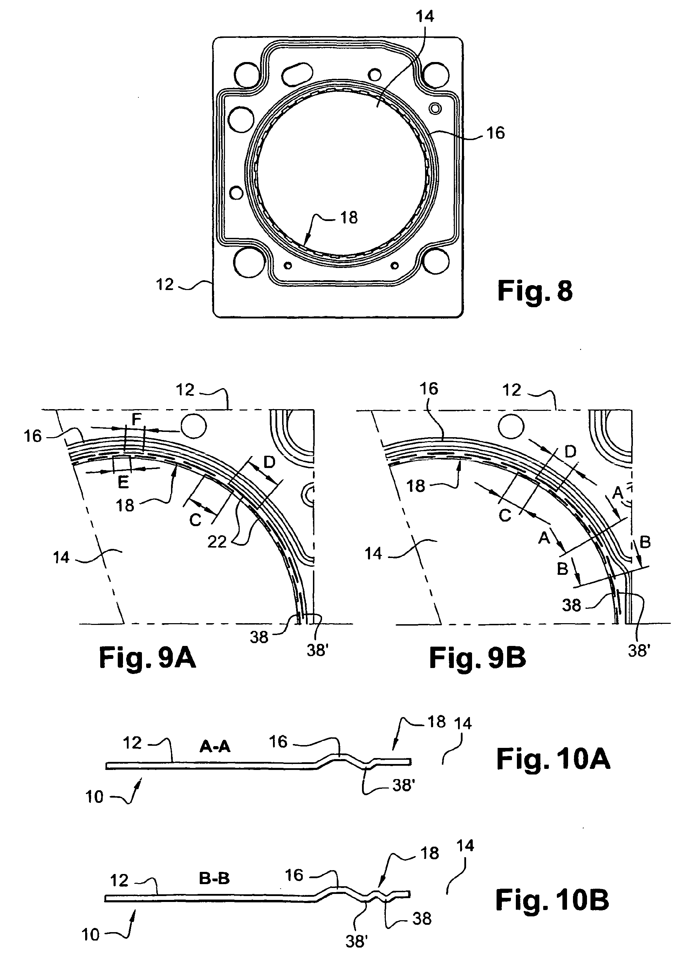

Selon un autre mode de réalisation, illustré par les figures 9A, 9B, 10A et 10B, pour une surépaisseur formant stoppeur, les protubérances sont disposées en quinconces selon deux lignes 38, 38' concentriques faiblement espacées.

De préférence, les protubérances sont réparties sur les deux lignes de manière à ce que les extrémités 28 des protubérances de la ligne 38 soient disposées en face selon une direction radiale des extrémités 28 des protubérances de la ligne 38, les parties centrales 30 des protubérances de la ligne 38 étant disposées en face selon une direction radiale d'un espacement entre deux protubérances 22 de la ligne 38' et vice versa. Cet agencement permet de renforcer la rigidité en rapprochant des extrémités orientées en sens opposés. De plus, les protubérances 22 des deux lignes 38 et 38' disposées en quinconce, avec un faible espacement entre les protubérances de deux lignes différentes forment une première barrière d'étanchéité.

Ainsi, selon une coupe radiale A-A, la surépaisseur comprend la partie centrale d'une protubérance et selon une coupe radiale B-B une protubérance de la ligne 38 et une autre protubérance de la ligne 38'.

Bien entendu, l'invention n'est évidemment pas limitée au mode de réalisation représenté et décrit ci-dessus, mais en couvre au contraire toutes les variantes, notamment en ce qui concerne les formes, dimensions et matériaux des différents éléments, conformes à l'objet des revendications.

Enfin, l'invention n'est pas limitée à l'application décrite et peut convenir à tous les types de joints métalliques nécessitant une surépaisseur au niveau d'une tôle.

## Revendications

1. Joint susceptible d'être disposé entre des surfaces à étancher, comprenant au moins une ouverture et/ou orifice (14) de manière à faire communiquer des conduits débouchant respectivement au niveau de chaque surface à étancher, et au moins une feuille ou plaque, appelée tôle (12), ladite tôle comprenant au moins une nervure (16) formant une barrière d'étanchéité ainsi qu'au moins une surépaisseur (18, 20) forment butée, constituée d'une pluralité de protubérances (22) avec chacune d'un côté de la tôle une forme en creux et de l'autre côté de la tôle une forme en saillie, **caractérisé en ce que** les protubérances sont oblongues et **en ce que** les axes médians (32) des protubérances (22) sont alignés selon au moins une ligne et **en ce qu'**une surépaisseur comprend aux moins deux lignes (34, 34') de protubérances disposées en quinconce.

2. Joint selon la revendication 1, **caractérisé en ce que** les longueurs L des protubérances sont ajustées en fonction la rigidité de la ou des surépaisseurs.

3. Joint selon l'une quelconque des revendication précédentes, **caractérisé en ce qu'**une micro-nervure (36) est prévue entre deux lignes (34, 34') de protubérances.

4. Joint selon l'une quelconque des revendications précédentes, **caractérisé en ce que** les protubérances (22) sont réparties sur deux lignes (34, 34') de manière à disposer les extrémités (28) des protubérances (22) d'une ligne (34) au droit des parties centrales (30) des protubérances de l'autre ligne (34') et vice versa.

5. Joint selon l'une quelconque des revendications précédents, **caractérisé en ce que** les axes médians (32) des protubérances sont disposés selon des cercles concentriques aux ouvertures (14) entre lesdites ouvertures et les nervures (16) entourant lesdites ouvertures.

6. Joint selon l'une quelconque des revendications 1 à 4, **caractérisé en ce que** les axes médians (32) des protubérances sont disposés salon au moins une ligne parallèle au bord périphérique du joint,

7. Joint de culasse selon l'une quelconque des revendications précédentes.

## Claims

1. Gasket that can be positioned between surfaces that are to be sealed, comprising at least one opening and/or hole (14) to allow ducts that open respectively on to each of the surfaces that are to be sealed to communicate with one another, and at least one sheet or board, known as a plate (12), the said plate having at least one rib (16) forming a sealing barrier and at least one increase in thickness (18, 20) forming a buffer, consisting of a plurality of protuberances (22) each having, on one side of the plate, a recessed shape and, on the other side of the plate, a projecting shape, **characterized in that** the protuberances are oblong and **in that** the central axes (32) of protuberances (22) are aligned in at least one row and **in that** one increase in thickness comprises at least two rows (34, 34') of protuberances arranged in a staggered configuration.

2. Gasket according to Claim 1, **characterized in that** the lengths L of the protuberances are adjusted to suit the rigidity of the increase or increases in thickness.

3. Gasket according to either one of the preceding claims, **characterized in that** a microrib (36) is provided between two rows (34, 34') of protuberances.

4. Gasket according to any one of the preceding claims, **characterized in that** the protuberances (22) are spread over two rows (34, 34') so that the ends (28) of the protuberances (22) of one row (34) are aligned with the central portions (30) of the protuberances of the other row (34') and vice versa.

5. Gasket according to any one of the preceding claims, **characterized in that** the central axes (32) of the protuberances are positioned in circles concentric with the openings (14) between the said openings and the ribs (16) surrounding the said openings.

6. Gasket according to any one of Claims 1 to 4, **characterized in that** the central axes (32) of the protuberances are arranged in at least one row parallel to the peripheral edge of the gasket.

7. Cylinder head gasket according to any one of the preceding claims.

## Patentansprüche

1. Dichtung, die zwischen abzudichtenden Flächen positioniert werden kann, mit mindestens einer Öffnung und/oder einem Loch (14), damit Kanäle, die jeweils an jeder abzudichtenden Fläche münden, miteinander in Verbindung stehen können, und mindestens einer Tafel oder Platte, Blech (12) genannt, wobei das Blech mindestens eine Rippe (16), die eine Dichtgrenze bildet, und mindestens eine einen Anschlag bildende Verdickung (18, 20) hat, die aus mehreren Höckern (22) mit jeweils einer Hohlausbildung auf der einen Seite des Blechs und einer vorragenden Ausbildung auf der anderen Seite des Blechs besteht, **dadurch gekennzeichnet, dass** die Höcker länglich sind und dass die Mittelachsen (32) der Höcker (22) auf mindestens eine Linie ausgerichtet sind und dass eine Verdickung mindestens zwei Reihen (34, 34') von versetzt angeordneten Höckern umfasst.

2. Dichtung nach Anspruch 1, **dadurch gekennzeichnet, dass** die Längen L der Höcker in Abhängigkeit von der Steifheit der Verdickung oder Verdickungen eingestellt sind.

3. Dichtung nach einem der vorhergehenden Ansprüche, **dadurch gekennzeichnet, dass** eine Mikrorippe (36) zwischen zwei Reihen (34, 34') von Höckern vorgesehen ist.

4. Dichtung nach einem der vorhergehenden Ansprüche, **dadurch gekennzeichnet, dass** die Höcker (22) so über die beiden Reihen (34, 34') verteilt sind, dass die Enden (28) der Höcker (22) einer Reihe (34) rechtwinklig zu den mittleren Teilen (30) der Höcker der anderen Reihe (34') angeordnet sind und umgekehrt.

5. Dichtung nach einem der vorhergehenden Ansprüche, **dadurch gekennzeichnet, dass** die Mittelachsen (32) der Höcker gemäß zu den Öffnungen (14) konzentrischen Kreisen zwischen den Öffnungen und den die Öffnungen umgebenden Rippen (16) angeordnet sind.

6. Dichtung nach einem der Ansprüche 1 bis 4, **dadurch gekennzeichnet, dass** die Mittelachsen (32) der Höcker gemäß mindestens einer parallel zum Umfangsrand der Dichtung verlaufenden Linie angeordnet sind.

7. Zylinderkopfdichtung nach einem der vorhergehenden Ansprüche.
